# FASCICULE DE BREVET EUROPEEN

(11) **EP 1 980 530 B1**
(45) Date de publication et mention de la délivrance du brevet: **06.07.2016**
(21) Numéro de dépôt: 08103248.4
(22) Date de dépôt: 31.03.2008
(51) Int. Cl.: C01B 31/02

(54) **Procédé de fabrication de nanotubes de carbone à partir de matières premieres renouvelables**
Herstellungsverfahren von Kohlenstoffnanoröhren aus erneuerbaren Rohstoffen
Method of manufacturing carbon nanotubes using renewable raw materials

(30) Priorité: 06.04.2007 FR 0702581
(43) Date de publication de la demande: 15.10.2008
(73) Titulaire: ARKEMA FRANCE, 92700 Colombes (FR)
(72) Inventeur: Bordere, Serge, 64110 Jurancon (FR); Cochard, Daniel, 64300, Argagnon (FR); Dutilh, Eric, 64170, Cescau (FR); Gaillard, Patrice, 64370, Hagetaubin (FR); Lozowski, André, 64230, Lescar (FR); Plee, Dominique, 64140, Lons (FR)
(74) Mandataire: Cabinet Plasseraud

(56) Documents cités:
- FR-A- 2 826 646
- US-A1- 2005 276 742
- DATABASE WPI Week 200728 Derwent Publications Ltd., London, GB; AN 2007-287434 XP002459766 & JP 2007 070166 A (CHUGAI RO KOGYO KAISHA LTD) 22 mars 2007 (2007-03-22)
- DATABASE CA [Online] CHEMICAL ABSTRACTS SERVICE, COLUMBUS, OHIO, US; 20 avril 2006 (2006-04-20), PETERSEN, ELIJAH J. ET AL: "Synthesis of carbon-14 labeled multi-walled carbon nanotubes and quantification of their uptake by ecological receptors" XP002481450 extrait de STN Database accession no. 144:336057 & PREPRINTS OF EXTENDED ABSTRACTS PRESENTED AT THE ACS NATIONAL MEETING, AMERICAN CHEMICAL SOCIETY, DIVISION OF ENVIRONMENTAL CHEMISTRY , 46(1), 479-483 CODEN: PEACF2; ISSN: 1524-6434, 2006,

## Description

### Domaine de l'invention

La présente invention se rapporte à un procédé industriel de fabrication de nanotubes de carbone à partir de matières premières renouvelables.

Plus précisément, l'invention a pour objet un procédé de fabrication de nanotubes de carbone (NTC en abréviation) utilisant comme source de carbone un alcène tel que l'éthylène obtenu par déshydratation d'un alcool tel que de l'éthanol issu de la fermentation de matières végétales. Les matières végétales présentent l'avantage de pouvoir être cultivées en grande quantité, selon la demande, sur la majeure partie du globe terrestre et d'être renouvelables.

### Technique antérieure

Les NTC font l'objet depuis ces dernières années d'une recherche intensive, en vue de remplacer le noir de carbone volatil et difficile à manipuler dans toutes ses applications. Les NTC présentent en outre l'avantage de conférer des propriétés mécaniques et des propriétés de conduction électrique et/ou thermique améliorées à tout matériau composite les contenant, au moins égales à celles du noir de carbone à des teneurs plus faibles. Leurs bonnes propriétés mécaniques et notamment de résistance à l'élongation sont liées en partie à leurs rapports de forme (longueur/diamètre) très élevés.

Ils se composent d'un ou plusieurs feuillets graphitiques agencés de façon concentrique autour d'un axe longitudinal. Pour des nanotubes composés d'un seul feuillet, on parle de SWNT (acronyme anglais de Single Wall Nanotubes) et pour des nanotubes composés de plusieurs feuillets concentriques, on parle alors de MWNT (acronyme anglais de Multi Wall Nanotubes). Les SWNT sont en général plus difficiles à fabriquer que les MWNT.

Les nanotubes de carbone peuvent être fabriqués selon différents procédés comme la décharge électrique, l'ablation laser, le dépôt chimique en phase vapeur (CVD en abréviation) ou le dépôt physique en phase vapeur (PVD en abréviation).

Selon la Demanderesse, le procédé de fabrication des NTC le plus prometteur en termes de qualité des NTC, de reproductibilité des caractéristiques des NTC, et de productivité est le procédé CVD. Ce procédé consiste à injecter une source de gaz riche en carbone, dans un réacteur renfermant un catalyseur métallique porté à haute température ; au contact du métal, la source de gaz se décompose en NTC à plan graphitique et en hydrogène. En général, le catalyseur est constitué d'un métal catalytique tel que le fer, le cobalt, le nickel, le molybdène, supporté par un substrat solide, sous forme de grains, et chimiquement inerte, tel que l'alumine, la silice, la magnésie ou encore le carbone.

Les sources gazeuses de carbone généralement utilisées sont le méthane, l'éthane, l'éthylène, l'acétylène, le benzène.

A titre d'exemple de documents décrivant ce procédé CVD, on peut citer le document WO 86/03455 d'Hyperion Catalysis International Inc. que l'on peut considérer comme l'un des brevets de base sur la synthèse des NTC ; ce document décrit des fibrilles de carbone (ancienne dénomination des NTC) quasi cylindriques, dont le diamètre est compris entre 3,5 et 70 nm et dont le rapport de forme est supérieur ou égal à 100, ainsi que leur procédé de préparation.

Les NTC sont synthétisés par mise en contact d'un catalyseur contenant du fer (par exemple Fe₃O₄, Fe sur un support de charbon, Fe sur un support d'alumine ou Fe sur un support en fibrille carbonée) avec un composé gazeux riche en carbone, tel qu'un hydrocarbure, en présence d'un autre gaz capable de réagir avec le composé gazeux riche en carbone ; la synthèse est réalisée à une température choisie dans la gamme allant de 850°C à 1200°C. Le catalyseur est préparé par imprégnation à sec, par précipitation ou par imprégnation en voie humide.

Aucune information sur la productivité (qui serait exprimée comme la masse de fibrilles formées par gramme de catalyseur et par unité de temps) n'est donnée, hormis le fait qu'il faut travailler, dans le cas où le composé gazeux contenant du carbone est le benzène, à plus de 800°C.

D'autres documents décrivent des améliorations de ce procédé, telles que l'utilisation d'un lit fluidisé continu de catalyseur, qui permet de contrôler l'état d'agrégation du catalyseur et des matériaux carbonés formés (voir par exemple WO 02/94713A1 au nom de l'Université de Tsinghua et FR 2 826 646 INPT).

Les NTC fabriqués se « fixent » sur les grains du catalyseur sous forme d'un réseau tridimensionnel enchevêtré, formant des agrégats typiquement de l'ordre de 300 à 600 *µ*m.

Les NTC ainsi obtenus peuvent être utilisés tels quels dans la plupart des applications ; mais il est également possible de les soumettre à une étape supplémentaire ultérieure de purification, destinée à séparer les NTC des grains du support catalytique.

La limite de taille des agrégats de NTC est par exemple atteinte lorsque tous les sites catalytiques disponibles ont réagi et/ou lorsque l'enchevêtrement des NTC autour du support réduit la diffusion des gaz réactifs (de la source de carbone) vers les sites catalytiques ainsi que la surface de catalyseur qui peut réagir.

Le procédé utilisé majoritairement pour la fabrication des sources gazeuses de carbone telles que les hydrocarbures gazeux est basé sur le craquage à haute température de coupes pétrolières. Ce procédé exigeant des températures élevées (au moins 800°C) est très consommateur d'énergie. En outre, il met en oeuvre du pétrole dont les gisements s'épuisent rapidement ; son extraction est de plus en plus difficile (puits de grandes profondeurs), nécessitant des équipements lourds et chers, devant résister à des hautes températures (400-500°C). Le coût de fabrication des gaz de craquage augmente de jour en jour, ce qui va à l'encontre de la production en masse de NTC à bas coût, condition essentielle pour assurer des débouchés commerciaux dans les applications mettant en jeux des polymères et des résines chargés par des NTC.

Jusqu'à ce jour, personne ne s'est intéressé aux procédés de fabrication industriels des sources de carbone gazeuses en amont de la production de NTC.

Le document JP2007-070166 divulgue, certes, un procédé de production de nanotubes de carbone à partir d'une source de carbone d'origine végétale. Ce procédé n'est toutefois pas exploitable à l'échelle industrielle. En effet, la source de carbone est issue de la gazéification d'une biomasse par décomposition thermique à 700°C suivie d'un reformage à 1150°C. Ce procédé génère un mélange de diverses molécules, riche en hydrocarbures liquides lourds. Les nanotubes de carbone formés à partir de cette source de carbone sont impurs et présentent un fort taux de coke. L'obtention de nanotubes de carbone de qualité acceptable nécessite des coûts de purification élevés qui, ajoutés aux dépenses énergétiques associées au procédé de gazéification à haute température, affectent négativement l'économie du procédé.

Le procédé selon l'invention permet de s'affranchir de la consommation de pétrole, de réduire la consommation d'énergie, et de faire appel à des sources gazeuses issues de la culture de végétaux. Il permet également d'obtenir des nanotubes de carbone de bonne qualité et en particulier de pureté convenant à des applications industrielles exigeantes, notamment dans le domaine de l'électronique.

En plus des avantages mentionnés ci-dessus, le procédé de fabrication des NTC selon l'invention permet d'améliorer significativement la productivité du catalyseur mis en oeuvre et ce, sans nécessiter d'étape supplémentaire de purification. Il permet, en outre, le recyclage des sous-produits synthétisés lors de la fabrication des NTC, un coût plus faible de fabrication et un bilan énergétique favorable.

### Résumé de l'invention

De façon plus précise, l'invention a pour objet un procédé de fabrication de nanotubes de carbone, comprenant les étapes suivantes :
a) la synthèse d'alcool(s) par fermentation d'au moins une matière végétale et éventuellement la purification du produit obtenu ;
b) la déshydratation du ou des alcool (s) obtenu(s) en a) pour produire, dans un premier réacteur, un mélange d'alcène(s) et d'eau et éventuellement la purification du produit obtenu ;
c) l'introduction, notamment la mise en lit fluidisé, dans un second réacteur, d'un catalyseur pulvérulent à une température allant de 450 à 850°C, ce catalyseur comprenant au moins un métal catalytique supporté par un substrat solide inerte, les grains de catalyseur ayant un d50 inférieur à 300 *µ*m ;
d) la mise en contact de l'alcène produit en b) avec le catalyseur pulvérulent, éventuellement en lit fluidisé, de l'étape c) pour former en surface dudit catalyseur des nanotubes de carbone et de l'hydrogène par décomposition catalytique dudit alcène ;
e) la récupération des nanotubes de carbone produits en d).

La première étape du procédé selon l'invention comprend la fermentation d'au moins une matière végétale pour produire de l'alcool. Cette matière végétale peut notamment être choisie parmi les sucres, l'amidon et les extraits de plantes en contenant, parmi lesquelles on peut citer la betterave, la canne à sucre, les céréales telles que le blé, l'orge, le sorgho ou le maïs, ainsi que la pomme de terre, sans que cette liste ne soit limitative. Il peut alternativement s'agir de biomasse (mélange de cellulose, hémicellulose et lignine). On obtient alors par fermentation, par exemple à l'aide de *Saccharomyces cerevisiae* ou son mutant, de l'éthanol. Dans une variante moins préférée, la matière végétale peut être une source de cellulose, telle que de la paille, du bois ou du papier, qui peut conduire par fermentation, notamment à l'aide de *Clostridium thyrobutylicum* ou *acetobutylicum* ou leurs mutants, à la production de propanol et/ou de butanol. La matière végétale mise en oeuvre se trouve généralement sous forme hydrolysée avant l'étape de fermentation. Cette étape préliminaire d'hydrolyse permet ainsi, par exemple, la saccharification de l'amidon pour le transformer en glucose, ou la transformation du sucrose en glucose.

Ces procédés de fermentation sont bien connus de l'homme du métier. Ils comprennent par exemple la fermentation des matières végétales en présence d'une ou plusieurs levures ou de mutants de ces levures (micro-organismes naturellement modifiés en réponse à un stress chimique ou physique), suivie d'une distillation permettant de récupérer l'alcool, en particulier l'éthanol, sous forme de solution aqueuse plus concentrée qui est ensuite traitée en vue d'augmenter encore sa concentration molaire en alcool tel que l'éthanol.

L'alcool obtenu dans cette première étape du procédé selon l'invention peut éventuellement être purifié. En particulier, l'éthanol est généralement obtenu en mélange avec des alcools plus lourds, dits alcools de Fusel, dont la composition dépend de la matière végétale utilisée et du processus de fermentation. Ceux-ci comprennent généralement environ 50% d'alcool iso-amylique (C5) et quelques pourcentages d'alcools en C3 et en C4 (iso-butanol). On préfère donc selon l'invention procéder à une purification de l'alcool produit par fermentation, par exemple par absorption sur des filtres du type tamis moléculaires, noir de carbone ou zéolithes.

Dans la seconde étape du procédé selon l'invention, l'alcool obtenu par fermentation est déshydraté dans un premier réacteur en un mélange d'alcène et d'eau. On préfère que l'alcool soit injecté en tête du premier réacteur. Cette étape de déshydratation est généralement conduite en présence d'un catalyseur, qui peut notamment être à base de silicalite dans le cas du propanol ou de γ-alumine dans le cas de l'éthanol. Un exemple de catalyseur adapté à la déshydratation de l'éthanol est notamment commercialisé par la société EUROSUPPORT sous la dénomination commerciale ESM 110^{®}. Il s'agit d'une alumine trilobique non dopée contenant peu de Na₂O résiduel (habituellement 0,04%). L'homme du métier saura choisir les conditions opératoires optimales pour cette étape de déshydratation. A titre d'exemple, il a été démontré qu'un ratio du débit volumique d'éthanol liquide au volume de catalyseur de 1h⁻¹ et une température moyenne du lit catalytique de 400°C conduisaient à une conversion quasi-totale de l'éthanol avec une sélectivité en éthylène de l'ordre de 98%.

L'alcène obtenu dans cette étape du procédé selon l'invention peut éventuellement être constitué d'un mélange d'alcènes, en particulier dans le cas où l'alcool produit par fermentation était constitué d'un mélange d'éthanol et d'alcools de Fusel et n'a pas été purifié à l'issue de l'étape (a). Il est donc avantageux dans ce cas de prévoir une étape de purification des alcènes obtenus à l'issue de l'étape (b), par exemple par absorption sur des filtres du type tamis moléculaires, noir de carbone ou zéolithes.

L'alcène obtenu dans cette seconde étape est de préférence constitué uniquement ou majoritairement d'éthylène. Il est destiné à être transformé en nanotubes de carbone par passage sur un catalyseur pulvérulent, avantageusement en lit fluidisé.

Ce catalyseur comprend au moins un métal catalytique, de préférence le fer, supporté par un substrat solide inerte. Ce catalyseur pulvérulent peut notamment être fabriqué par imprégnation du substrat solide par une solution aqueuse dudit métal catalytique, de préférence sous agitation mécanique et par exemple à une température de 100 à 150°C, puis calcination du substrat solide ainsi imprégné, en particulier à une température de 200°C à 400°C. Le d50 des grains de catalyseur est inférieur à 300 *µ*m, de préférence inférieur à 200 *µ*m et préférentiellement supérieur à 100 *µ*m. Par « d50 », on entend dans cette description le diamètre auquel est inférieur celui de 50% en volume des particules, tel que mesuré par granulométrie laser, notamment à l'aide d'un appareil de type Malvern.

Dans la troisième étape du procédé selon l'invention, ce catalyseur est avantageusement mis (de préférence sans avoir été soumis à aucun traitement supplémentaire) en lit fluidisé dans un second réacteur à une température de 450 à 850°C et de préférence de 500 à 700°C. Le temps de séjour du catalyseur dans le lit fluidisé peut notamment être compris entre 30 minutes et 3 heures et être par exemple d'environ une heure.

En variante, l'étape (c) peut être mise en oeuvre en lit fixe, dans un réacteur tubulaire horizontal ou incliné, le catalyseur étant introduit à l'une des extrémités (en partie haute dans le cas d'un réacteur incliné) et le gaz à l'autre extrémité. Le réacteur tubulaire peut éventuellement être mis en rotation selon son axe longitudinal, comme décrit notamment dans le document FR 1 445 236.

On réalise ensuite, dans une quatrième étape, la mise en contact de l'alcène produit en b) avec le catalyseur pulvérulent, éventuellement en lit fluidisé, de l'étape c) pour former en surface dudit catalyseur des nanotubes de carbone et de l'hydrogène par décomposition catalytique dudit alcène. Le fait d'opérer en lit fluidisé permet d'optimiser le contact entre les gaz, en particulier l'alcène, et le catalyseur.

Dans cette étape, on préfère que l'alcène soit mélangé à un flux d'hydrogène et/ou à au moins une partie de l'eau produite lors de la déshydratation de l'alcool en b), qui peut dans ce cas être injectée dans le second réacteur en même temps que l'alcène produit. On préfère par ailleurs que ce mélange gazeux soit injecté en pied du second réacteur.

Le taux de conversion de l'alcène tel que l'éthylène peut être mesuré par chromatographie en continu, de façon à évaluer la fin de la réaction.

L'hydrogène produit par la réaction et les gaz usés peuvent être évacués par le haut du réacteur et brûlés à la torche, ou l'hydrogène produit dans cette étape peut être envoyé au moins en partie dans un oxydeur thermique pour la combustion des gaz produits lors des étapes a) à e) et/ou recyclé au moins en partie dans le second réacteur. En variante, l'hydrogène produit au cours de cette quatrième étape peut être réinjecté dans le second réacteur.

Les nanotubes de carbone produits dans cette quatrième étape sont récupérés dans la cinquième étape du procédé selon l'invention. Ils se trouvent alors fixés sur des grains de catalyseur et peuvent être utilisés tels quels dans leurs différentes applications. En variante, il est toutefois possible de prévoir une étape supplémentaire permettant de séparer les nanotubes de carbone des grains de catalyseur. On préfère selon l'invention que la récupération des nanotubes de carbone soit séquencée.

Dans un mode de réalisation préféré de l'invention, les étapes c) à e) ci-dessus sont mises en oeuvre simultanément en continu dans le second réacteur. Selon une forme préférée de l'invention, le catalyseur pulvérulent est injecté dans le second réacteur sous forme d'impulsions, avec injection continue des gaz en pied et récupération des NTC produits par surverse en tête du réacteur.

Avantageusement, le procédé selon l'invention, comprend une étape de broyage des NTC obtenus lors de l'étape d) et/ou e) afin de désagglomérer les NTC éventuellement enchevêtrés, formés sur le catalyseur, et réduire ainsi leur granulométrie. Cette étape de broyage permet aussi de rendre accessibles des sites catalytiques actifs du catalyseur ; en effet, l'enchevêtrement des NTC autour du catalyseur réduit la diffusion du mélange réactif gazeux (mélange d'alcène et d'eau) vers les sites catalytiques ainsi que la surface réactive du catalyseur. Il s'ensuit une productivité améliorée du catalyseur grâce à cette étape de broyage.

Cette étape de broyage peut être mise en oeuvre à froid ou à chaud et être réalisée selon les techniques connues opérées dans des appareils tels que broyeur à boulets, à marteaux, à meules, à couteaux, jet de gaz ou tout autre système de broyage susceptible de réduire la taille du réseau enchevêtré de NTC. Selon l'invention, cette étape de broyage est telle qu'elle permette de réduire la taille des particules à un d50 de moins de 200*µ*m, tout en permettant leur mise en oeuvre ultérieure (étape c) selon une technique de CVD (de préférence en lit fluidisé), qui ne serait pas possible si le d50 des NTC à l'issue de l'étape de broyage était inférieur à 100 *µ*m.

De manière préférentielle, l'étape de broyage est pratiquée selon une technique de broyage par jet de gaz. Les gaz utilisés comme apport d'énergie peuvent avantageusement être les gaz réactifs entrants.

Le dispositif de broyage peut être placé soit dans une boucle externe permettant le recyclage éventuel, total ou partiel des NTC broyés au sein du réacteur (broyage ex-situ), soit avantageusement placé au sein même du réacteur de synthèse des NTC (second réacteur).

Ainsi, au moins une partie des NTC, issue de l'étape d) peut être extraite du réacteur de fabrication des NTC vers un dispositif de broyage opérant en continu, puis injectée dans le second réacteur.

On peut aussi réaliser le broyage dans le réacteur de fabrication des NTC, ce qui évite d'extraire la poudre du réacteur et donc limite les pertes de charges et les risques d'envolement des poudres ; la productivité se trouve donc améliorée.

Le dispositif de broyage utilise généralement un système de jets de gaz à grande vitesse générés au travers d'injecteurs qui entraînent la poudre de NTC sur des cibles maintenues par un support, permettant ainsi de réduire la granulométrie par impact. La fluidisation peut être réalisée par ces seuls injecteurs et/ou associée à un flux gazeux diffusé par un distributeur disposé autour de ces injecteurs. Les dimensions du système de broyage et les débits d'entrée de gaz utilisés sont adaptés pour obtenir une bonne fluidisation et la granulométrie désirée, suivant la dureté et la densité du support catalytique.

Les nanotubes de carbone susceptibles d'être obtenus suivant le procédé décrit se caractérisent en ce qu'ils comprennent du carbone d'origine renouvelable, c'est-à-dire du ¹⁴C. En effet, tous les échantillons de carbone tirés d'organismes vivants, et en particulier de la matière végétale utilisée dans la première étape du procédé selon l'invention, sont un mélange de trois isotopes : ¹²C, ¹³C et ¹⁴C dans un rapport ¹⁴C/¹²C maintenu constant par échange continu du carbone avec l'environnement et qui est égal à 1,2 × 10⁻¹². Bien que le ¹⁴C soit radioactif et que sa concentration décroisse donc au cours du temps, sa demi-vie est de 5730 ans, de sorte qu'on estime que la teneur en ¹⁴C est constante depuis l'extraction de la matière végétale jusqu'à la fabrication des NTC et même jusqu'à la fin de leur utilisation.

Plus précisément, on considère que les NTC obtenus selon l'invention contiennent au moins 20% en masse, de préférence au moins 50% en masse, de carbone d'origine renouvelable sur la masse totale de carbone. En d'autres termes, ils contiennent au moins 0,2 x 10⁻¹⁰% en masse de ¹⁴C, de préférence au moins 0,6 x 10⁻¹⁰% en masse de ¹⁴C.

La teneur en ¹⁴C des NTC peut être mesurée par exemple selon les techniques suivantes :
- Par spectrométrie à scintillation liquide : cette méthode consiste à compter des particules 'Bêta' issues de la désintégration du ¹⁴C. On mesure le rayonnement Béta issu d'un échantillon de masse connue (nombre d'atomes de carbone connu) pendant un certain temps. Cette 'radioactivité' est proportionnelle au nombre d'atomes de ¹⁴C, que l'on peut ainsi déterminer. Le ¹⁴C présent dans l'échantillon émet des rayonnements ß-, qui au contact du liquide scintillant (scintillateur) donnent naissance à des photons. Ces photons ont des énergies différentes (comprises entre 0 et 156 Kev) et forment ce que l'on appelle un spectre de ¹⁴C. Selon deux variantes de cette méthode, l'analyse porte soit sur le CO₂ préalablement produit par l'échantillon carboné dans une solution absorbante appropriée, soit sur le benzène après conversion préalable de l'échantillon carboné en benzène.
- Par spectrométrie de masse : l'échantillon est réduit en graphite ou en CO₂ gazeux, analysé dans un spectromètre de masse. Cette technique utilise un accélérateur et un spectromètre de masse pour séparer les ions ¹⁴C des ¹²C et donc déterminer le rapport des deux isotopes.

Ces méthodes de mesure de la teneur en ¹⁴C des matériaux sont décrites précisément dans les normes ASTM D 6866 (notamment D6866-06) et dans les normes ASTMD 7026 (notamment 7026-04). Ces méthodes mesurent le rapport ¹⁴C/¹²C d'un échantillon et le comparent avec le rapport ¹⁴C/¹² C d'un échantillon référence d'origine 100% renouvelable, pour donner un pourcentage relatif de carbone d'origine renouvelable dans l'échantillon.

La méthode de mesure préférentiellement utilisée dans le cas des NTC est la spectrométrie de masse décrite dans la norme ASTM D6866-06 (« accelerator mass spectroscopy »).

Les NTC préparés selon l'invention peuvent être utilisés dans toutes les applications où les NTC sont mis en oeuvre, notamment dans des domaines où leurs propriétés électriques sont recherchées (selon la température et leur structure, ils peuvent être conducteurs, semiconducteurs ou isolants), et/ou dans des domaines où leurs propriétés mécaniques sont recherchées, par exemple pour le renfort des matériaux composites (les NTC sont cent fois plus résistants et six fois plus légers que l'acier). On peut par exemple citer l'utilisation de NTC dans des compositions macromoléculaires destinées par exemple à l'emballage de composants électroniques, à la fabrication de conduites d'essence (fuel line), de revêtements (coating) antistatiques, dans des thermistors, des électrodes pour supercapacités, etc.

L'invention sera décrite plus en détail par référence aux exemples suivants qui sont donnés à titre purement illustratif et nullement limitatif, et par référence aux dessins annexés, dans desquels :
La Figure 1 est une vue d'ensemble du procédé selon l'invention, et
La Figure 2 illustre un dispositif de broyage installé au sein même du réacteur de synthèse des NTC.

### EXEMPLES

### Exemple 1 : Procédé de synthèse de NTC

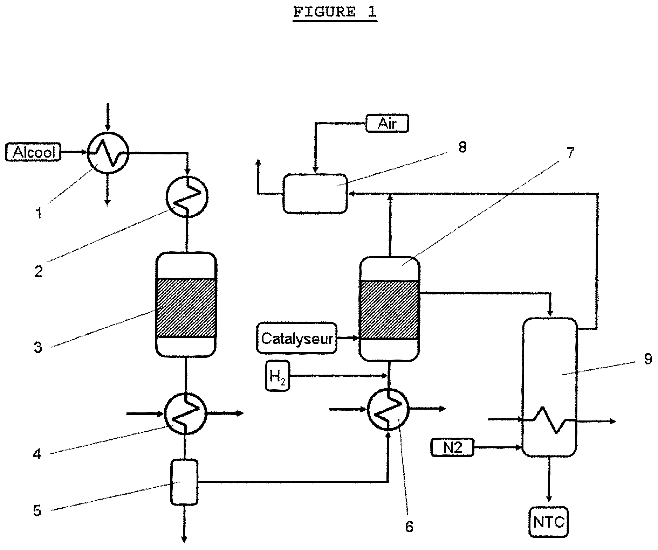

Comme illustré à la Figure 1, le procédé selon l'invention peut être mis en oeuvre dans une installation comprenant une zone de déhydratation d'éthanol, une zone de synthèse de NTC et une zone de traitement des effluents gazeux, l'ensemble permettant de produire en continu des NTC.

Dans cette installation, de l'éthanol à 96% est vaporisé dans un vaporiseur **1,** puis préchauffé dans un échangeur thermique **2,** avant d'être injecté en tête d'un premier réacteur **3** de 127 mm de diamètre contenant un lit catalytique porté à 300-400°C et constitué d'une couche d'alumine ESM110^{®} d'EUROSUPPORT, représentant un volume de 12700 cm³ et une masse de 6500 g, le rapport du débit volumique d'éthanol au volume de catalyseur étant de 1h⁻¹. Le mélange d'eau et d'éthylène produit dans le réacteur est refroidi dans l'échangeur thermique **4,** avant d'être envoyé vers un séparateur gaz-liquide **5** où l'éthylène et l'eau (mélangée éventuellement à des sous-produits) sont séparés.

L'éthylène ainsi séparé est alors préchauffé dans un échangeur thermique **6,** puis envoyé en pied d'un second réacteur **7** de 25 cm de diamètre et 1 m de hauteur efficace chauffé à 700°C.

Le catalyseur a été préparé par imprégnation d'une solution de nitrate de fer sur une alumine gamma Puralox SCCA 5-150 de diamètre médian égal à environ 85 *µ*m ; l'imprégnation a été réalisée en lit fluidisé sous flux d'air à 100°C pour garder la poudre sèche tout au long de l'opération. A la fin de l'imprégnation, la poudre obtenue a été calcinée sous air à 200°C en lit fluidisé durant 8 heures puis en lit fixe à 400°C pendant 16 heures.

Ce catalyseur en poudre est ensuite introduit par impulsions d'environ 50g dans le réacteur 7 qui est alimenté simultanément par l'éthylène à un débit de 4000 NL/h, et d'hydrogène à un débit de 1000 NL/h, ce qui correspond à une pression partielle en éthylène de 0,80.

Une analyse chromatographique des gaz de sortie du réacteur 7 permet de suivre la conversion de l'éthylène en NTC.

Ces gaz sont majoritairement constitués d'hydrogène et renferment également une faible proportion d'éthylène et éventuellement de méthane et d'éthane.

Lorsque la conversion de l'éthylène en NTC est inférieure à 70%, une injection de catalyseur est effectuée à nouveau dans le réacteur.

Les NTC (fixés sur les grains de catalyseur) sont récupérés par surverse dans un séparateur gaz/solide refroidi **9** où ils sont soumis à un balayage à l'azote destiné à purger la poudre de NTC des résidus de gaz combustibles. Cette opération permet de récupérer, d'une part, les NTC bruts ayant un d50 de 420 *µ*m et une pureté de 93 % environ et, d'autre part, l'azote usé qui est envoyé comme les gaz de sortie vers un oxydeur thermique **8.**

### Exemple 2 : Procédé de synthèse de NTC comprenant une étape de broyage in situ

Le procédé décrit à l'Exemple 1 est repris, excepté qu'un broyage à jet de gaz des NTC est réalisé dans leur réacteur de synthèse.

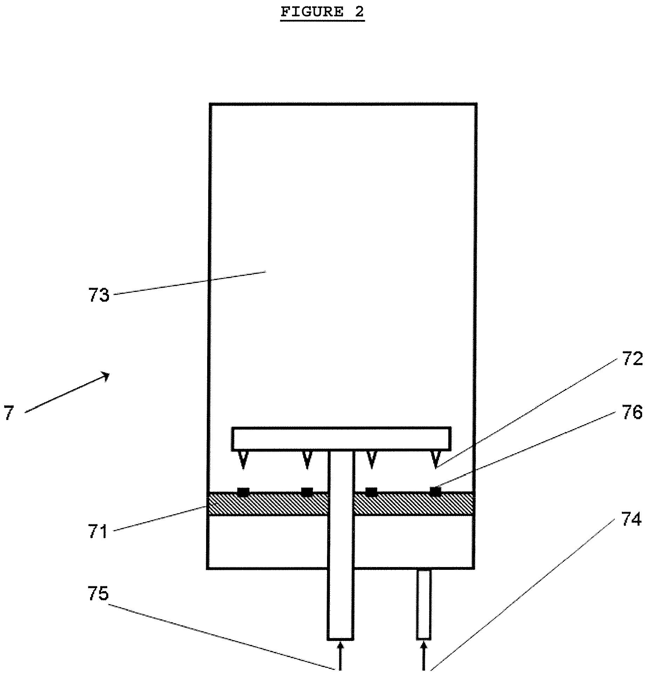

Le broyage est réalisé à la température de synthèse dans un réacteur de synthèse de NTC 7 selon la Figure 2 muni d'un distributeur poreux 71 équipé d'une rampe de buses 72 permettant l'injection de gaz 75 à haute vitesse impactant la poudre de NTC sur des cibles pleines 76 fixées sur le distributeur. Le milieu 73 est fluidisé grâce à ce courant de gaz 75, ainsi qu'à un courant de gaz complémentaire (de préférence composé des gaz réactifs) 74 traversant le distributeur 71.

Le débit des différents flux de gaz et la durée d'injection dans les buses sont réglés pour que le milieu reste fluidisé.

## Revendications

1. Procédé de fabrication de nanotubes de carbone, comprenant les étapes suivantes :
a) la synthèse d'alcool(s) par fermentation d'au moins une matière végétale et éventuellement la purification du produit obtenu ;
b) la déshydratation du ou des alcool(s) obtenu(s) en a) pour produire, dans un premier réacteur, un mélange d'alcène(s) et d'eau et éventuellement la purification du produit obtenu ;
c) l'introduction, notamment la mise en lit fluidisé, dans un second réacteur, d'un catalyseur pulvérulent à une température allant de 450 à 850°C, ce catalyseur comprenant au moins un métal catalytique supporté par un substrat solide inerte, les grains de catalyseur ayant un d50 inférieur à 300 µm ;
d) la mise en contact de l'alcène produit en b) avec le catalyseur pulvérulent, éventuellement en lit fluidisé, de l'étape c) pour former en surface dudit catalyseur des nanotubes de carbone et de l'hydrogène par décomposition catalytique dudit alcène ;
e) la récupération des nanotubes de carbone produits en d).

2. Procédé selon la revendication 1, **caractérisé en ce que** les étapes c) à e) sont mises en oeuvre simultanément en continu dans le second réacteur.

3. Procédé selon l'une quelconque des revendications précédentes, **caractérisé en ce que** la matière végétale est choisie parmi la betterave ; la canne à sucre ; les céréales telles que le maïs, le blé, l'orge et le sorgho ; la pomme de terre ; la biomasse ; et une source de cellulose.

4. Procédé selon la revendication 3, **caractérisé en ce que** la céréale est le maïs.

5. Procédé selon l'une quelconque des revendications 1 à 4, **caractérisé en ce que** l'alcool est l'éthanol.

6. Procédé selon l'une quelconque des revendications précédentes, **caractérisé en ce que** l'étape b) est réalisée au moyen d'un catalyseur à base de γ-alumine.

7. Procédé selon l'une quelconque des revendications précédentes, **caractérisé en ce que** l'étape c) est réalisée à une température de 500°C à 700°C.

8. Procédé selon l'une quelconque des revendications précédentes, **caractérisé en ce que** l'alcène est mélangé dans l'étape c) à un flux d'hydrogène et/ou à au moins une partie de l'eau produite lors de la déshydratation de l'alcool en b).

9. Procédé selon l'une quelconque des revendications précédentes, **caractérisé en ce que** l'hydrogène produit en d) est recyclé au moins en partie dans le second réacteur.

10. Procédé selon l'une quelconque des revendications précédentes, **caractérisé en ce que** le métal catalytique est le fer.

11. Procédé selon l'une quelconque des revendications précédentes, **caractérisé en ce que** le catalyseur pulvérulent est fabriqué par imprégnation du substrat solide par une solution aqueuse dudit métal catalytique puis calcination du substrat solide ainsi imprégné.

12. Procédé selon la revendication précédente, **caractérisé en ce que** la calcination est effectuée à une température de 200°C à 400°C.

13. Procédé selon l'une quelconque des revendications précédentes, **caractérisé en ce que** le d50 des grains de catalyseur pulvérulent est inférieur à 200 µm et de préférence supérieur à 100 µm.

## Patentansprüche

1. Verfahren zur Herstellung von Kohlenstoffnanoröhren, umfassend die folgenden Schritte:
a) Synthese von Alkohol(en) durch Fermentation mindestens eines pflanzlichen Materials und gegebenenfalls Reinigung des erhaltenen Produkts;
b) Dehydratisierung des Alkohols oder der Alkohole, der (die) erhalten wurde (wurden) in a) zum Herstellen, in einem ersten Reaktor, eines Gemischs aus Alken(en) und Wasser und gegebenenfalls Reinigen des erhaltenen Produkts;
c) Einleitung, insbesondere die Überführung in ein Fluidbett bzw. Wirbelbett, in einen zweiten Reaktor, eines pulverförmigen Katalysators, bei einer Temperatur, die sich zwischen 450 bis 850 °C bewegt, wobei der Katalysator mindestens ein katalytisches Metall umfasst, das von einem inerten festen Substrat getragen wird, wobei die Katalysatorkörner einen D50-Wert unter 300 µm aufweisen;
d) In-Kontakt-bringen des Alkenprodukts aus b) mit dem pulverförmigen Katalysator, gegebenenfalls in einem Fluidbett gemäß Schritt c), zum Bilden von Kohlenstoffnanoröhren und Wasserstoff auf der Oberfläche des Katalysators durch katalytische Zersetzung des Alkens;
e) Rückgewinnung der Kohlenstoffnanoröhren, die in Schritt d) erzeugt wurden.

2. Verfahren nach Anspruch 1, **dadurch gekennzeichnet, dass** die Schritte c) bis e) simultan im Durchlaufverfahren im zweiten Reaktor durchgeführt werden.

3. Verfahren nach einem der vorhergehenden Ansprüche, **dadurch gekennzeichnet, dass** das pflanzliche Material ausgewählt wird aus Zuckerrübe; Zuckerrohr; Zerealien, wie etwa Mais; Weizen; Gerste und Sorghum; Kartoffel; Biomasse; und einer Zellulosequelle.

4. Verfahren nach Anspruch 3, **dadurch gekennzeichnet, dass** die Zerealie Mais ist.

5. Verfahren nach einem der Ansprüche 1 bis 4, **dadurch gekennzeichnet, dass** der Alkohol Ethanol ist.

6. Verfahren nach einem der vorhergehenden Ansprüche, **dadurch gekennzeichnet, dass** Schritt b) mittels eines Katalysators auf Basis von γ-Aluminiumoxid durchgeführt wird.

7. Verfahren nach einem der vorhergehenden Ansprüche, **dadurch gekennzeichnet, dass** Schritt c) bei einer Temperatur von 500 °C bis 700 °C durchgeführt wird.

8. Verfahren nach einem der vorhergehenden Ansprüche, **dadurch gekennzeichnet, dass** das Alken in Schritt c) gemischt wird mit einem Wasserstoffstrom und/oder mindestens einem Teil des Wassers, das während der Dehydratisierung des Alkohols in b) erzeugt wird.

9. Verfahren nach einem der vorhergehenden Ansprüche, **dadurch gekennzeichnet, dass** der Wasserstoff, der in d) erzeugt wird, zumindest teilweise in den zweiten Reaktor zurückgeführt wird.

10. Verfahren nach einem der vorhergehenden Ansprüche, **dadurch gekennzeichnet, dass** das katalytische Metall Eisen ist.

11. Verfahren nach einem der vorhergehenden Ansprüche, **dadurch gekennzeichnet, dass** der pulverförmige Katalysator hergestellt wird durch Imprägnierung eines festen Substrats mit einer wässrigen Lösung des katalytischen Metalls mit darauffolgender Kalzinierung des festen Substrats, das derart imprägniert wurde.

12. Verfahren nach dem vorhergehenden Anspruch, **dadurch gekennzeichnet, dass** die Kalzinierung bei einer Temperatur von 200 °C bis 400 °C erfolgt.

13. Verfahren nach einem der vorhergehenden Ansprüche, **dadurch gekennzeichnet, dass** der D50-Wert der Körner des pulverförmigen Katalysators unter 200 µm und vorzugsweise unter 100 µm ist.

## Claims

1. Process for producing carbon nanotubes, comprising the following stages:
a). the synthesis of alcohol(s) by fermentation of at least one vegetable matter and optionally the purification of the product obtained;
b) the dehydration of the alcohol or alcohols obtained in a) in order to produce, in a first reactor, a mixture of alkene(s) and water and optionally the purification of the product obtained;
c) the introduction, in particular the introduction into a fluidized bed, in a second reactor, of a powdery catalyst at a temperature ranging from 450 to 850°C, this catalyst comprising at least one catalytic metal supported by an inert solid substrate, the grains of catalyst having a D50 of less than 300 µm;
d) bringing the alkene produced in b) into contact with the powdery catalyst of stage c), optionally in a fluidized bed, in order to form carbon nanotubes and hydrogen on the surface of said catalyst by catalytic decomposition of said alkene;
e) the recovery of the carbon nanotubes produced in d).

2. Process according to claim 1, **characterized in that** stages c) to e) are implemented continuously and simultaneously in the second reactor.

3. Process according to any one of the preceding claims, **characterized in that** the vegetable matter is chosen from beet; sugar cane; cereals such as corn, wheat, barley and sorghum; potatoes; biomass; and a source of cellulose.

4. Process according to claim 3, **characterized in that** the cereal is corn.

5. Process according to any one of claims 1 to 4, **characterized in that** the alcohol is ethanol.

6. Process according to any one of the preceding claims, **characterized in that** stage b) is carried out by means of a catalyst based on γ-alumina.

7. Process according to any one of the preceding claims, **characterized in that** stage c) is carried out at a temperature of 500°C to 700°C.

8. Process according to any one of the preceding claims, **characterized in that** the alkene is mixed in stage c) with a flow of hydrogen and/or at least part of the water produced during the dehydration of the alcohol in b).

9. Process according to any one of the preceding claims, **characterized in that** the hydrogen produced in d) is recycled at least in part into the second reactor.

10. Process according to any one of the preceding claims, **characterized in that** the catalytic metal is iron.

11. Process according to any one of the preceding claims, **characterized in that** the powdery catalyst is produced by impregnation of the solid substrate with an aqueous solution of said catalytic metal then calcination of the solid substrate thus impregnated.

12. Process according to the preceding claim, **characterized in that** the calcination is carried out at a temperature of 200°C to 400°C.

13. Process according to any one of the preceding claims, **characterized in that** the d50 of the grains of powdery catalyst is less than 200 µm and preferably greater than 100 µm.
